# FASCICULE DE BREVET EUROPEEN

(11) **EP 0 633 987 B1**
(45) Date de publication et mention de la délivrance du brevet: **06.12.1995**
(21) Numéro de dépôt: 93922320.2
(22) Date de dépôt: 10.03.1993
(51) Int. Cl.: F16D 65/16, F16D 55/14, F16D 55/46, F16H 25/18

(54) **DISPOSITIF PERFECTIONNE DE SERRAGE A PLATEAU TOURNANT**
SPANNVORRICHTUNG MIT ROTIERENDER PLATTE
ADVANCED ROTARY PLATE CLAMPING DEVICE

(30) Priorité: 09.04.1992 FR 9204336
(43) Date de publication de la demande: 18.01.1995
(73) Titulaire: Bosch Systemes de Freinage, 93700 Drancy (FR)
(72) Inventeur: MOINARD, Patrice, F-93100 Montreuil (FR); THIOUX, Alain Résidence Van Gogh, F-94360 Bry-sur-Marne (FR); MERY, Jean, Claude, F-93320 Pavillons-sous-Bois (FR)
(74) Mandataire: Bentz, Jean-Paul
(86) Numéro de dépôt international: FR9300233
(87) Numéro de publication internationale: WO9321455

(56) Documents cités:
- EP-A- 0 209 271
- CH-A- 348 314
- DE-B- 1 034 952
- FR-A- 1 057 634
- US-A- 3 638 763

## Description

La présente invention concerne un dispositif de serrage comprenant deux plateaux sensiblement parallèles dont l'un au moins est susceptible d'être entraîné dans un mouvement de rotation autour d'un axe perpendiculaire à sa surface, une pluralité de cavités de guidage creusées dans l'un au moins de ces plateaux à distance de l'axe et une pluralité de billes correspondantes engagées dans les cavités et enserrées entre les deux plateaux, chaque cavité de guidage formant came et offrant une surface d'appui qui s'élève de façon monotone, en parcourant un angle non nul du mouvement de rotation, depuis une partie de profondeur maximale jusqu'à la surface du plateau.

Des dispositifs de ce type sont bien connus dans l'art antérieur et par exemple utilisés, comme le montre le brevet US 3 638 763, pour la commande de serrage de frein à main dans les véhicules automobiles.

Un problème classique qui se pose dans ces dispositifs est d'obtenir une force de serrage aussi grande que possible pour une rotation relative des plateaux correspondant à un trajet de billes aussi court que possible dans les cavités de guidage, et en limitant à une valeur aussi faible que possible l'effort nécessaire pour obtenir cette rotation.

A cette fin il est connu, par exemple par la demande de brevet EP 0 209 271, d'intervenir sur la forme des cavités de guidage et notamment de faire décroître la pente de ces cavités depuis leur partie de profondeur maximale jusqu'au voisinage de la surface du plateau dans lequel elles sont creusées.

Cependant, outre le fait que les dispositifs connus peuvent soulever des problèmes de fabrication relativement importants, en raison des formes éventuellement sophistiquées qu'ils adoptent, aucun d'eux n'optimise totalement le rapport entre la course et l'effort d'actionnement du dispositif de serrage et la force produite par ce dernier.

L'invention repose sur la mise en évidence de ce fait, et se propose de conduire à cette optimation.

A cette fin, le dispositif de l'invention est essentiellement caractérisé en ce que la partie de profondeur maximale de la cavité de guidage forme pour la bille correspondante un logement qui la maintient dans une position unique déterminée, et en ce que cette cavité comprend, dans une partie de moindre profondeur, une rampe qui intercepte le logement en une pluralité de points d'intersection au voisinage immédiat desquels d'une part la bille forme avec le logement une tangente de première pente et au voisinage desquels d'autre part la rampe présente une seconde pente sensiblement plus faible que la première pente, lesdits points d'intersection se trouvant ainsi sur une discontinuité de pente.

Ainsi, et contrairement aux dispositifs connus dans lesquels la variation de pente de la cavité de guidage n'intervient qu'à distance de la zone de profondeur maximale et/ou n'apparaît que de façon continue et progressive à partir de cette zone, le dispositif de l'invention permet le rattrapage de tous les jeux mécaniques dès le début de son actionnement et conduit, pour une même force d'entrée et une même course, à une force de serrage sensiblement supérieure à celle qu'autorisent les dispositifs connus.

D'autres caractéristiques et avantages de l'invention ressortiront clairement de la description qui en est faite ci-après, à titre indicatif et nullement limitatif, en référence aux dessins annexés, dans lesquels :
- La Figure 1 est une vue en perspective éclatée d'un dispositif de serrage à plateau tournant ;
- La Figure 2 est une vue en coupe schématique d'un plateau tournant, de la bille correspondante, et d'une cavité de guidage ayant un profil connu dans laquelle est logée la bille, la coupe étant réalisée suivant l'axe longitudinal de la cavité ;
- La Figure 3 superpose au contenu de la figure 2 le profil d'une cavité de guidage conforme à l'invention pour expliquer les différences entre cette dernière et l'art antérieur ;
- La Figure 4 est une vue en coupe agrandie et schématique d'un plateau tournant, de la bille correspondante, et d'une cavité de guidage conforme à un premier mode de réalisation de l'invention, la coupe étant réalisée suivant l'axe longitudinal de la bille ; et
- La Figure 5 est une vue analogue à celle de la Figure 4, mais concerne un second mode de réalisation de l'invention.

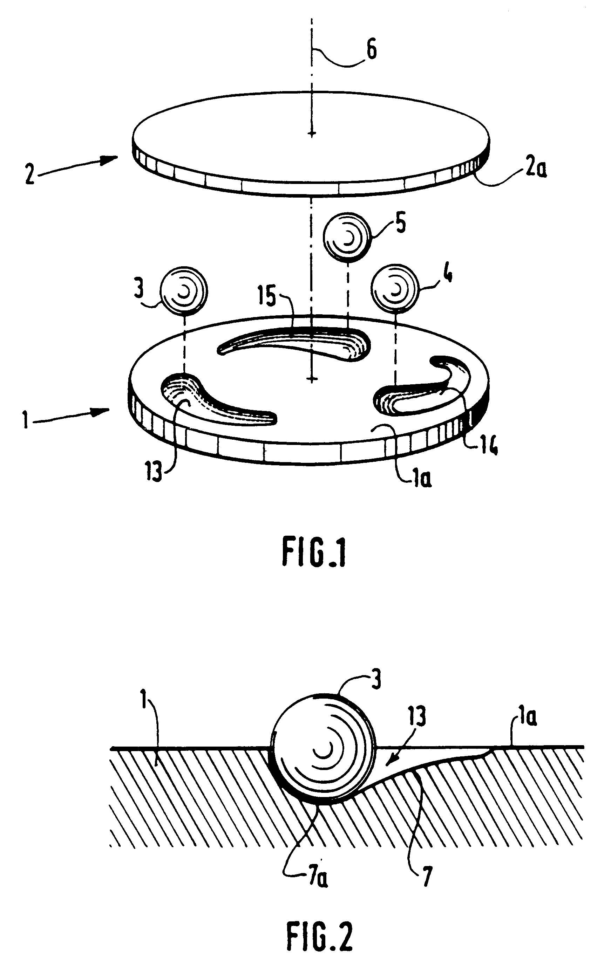

La Figure 1 représente de façon schématique un dispositif de serrage à plateau tournant.

Un tel dispositif comporte des premier et second plateaux 1 et 2, sensiblement parallèles l'un à l'autre et enserrant, entre leurs faces en vis-à-vis 1a et 2a (non visible), des billes telles que 3, 4 et 5.

Ces plateaux peuvent subir une rotation relative par entraînement en rotation de l'un d'eux au moins autour d'un axe 6 perpendiculaire à sa surface.

Les billes 3, 4 et 5 sont logées dans des cavités de guidage identiques telles que 13, 14, 15, creusées dans le premier plateau 1 au moins.

Ces cavités ont une forme allongée et présentent chacune un axe longitudinal de forme généralement circulaire et centré sur l'axe de rotation 6. Cependant, même lorsque ces cavités ont une forme ou une disposition différentes, elles se développent toujours dans le sens de leur longueur en parcourant un angle non nul du mouvement de rotation, de manière qu'un tel mouvement fasse progresser les billes à l'intérieur des cavités.

Comme le montre la Figure 2, qui illustre un exemple de l'art antérieur, chaque cavité telle que 13 joue un rôle de came et offre à la bille correspondante, telle que 3, une surface d'appui 7 qui s'élève de façon monotone depuis une partie de profondeur maximale 7a jusqu'à la surface la du plateau.

En d'autres termes, la surface d'appui 7 progresse toujours, depuis la zone 7a jusqu'à la surface 1a du plateau, dans le sens où elle tend à se rapprocher de cette surface, bien que cette progression puisse être plus ou moins rapide comme le montrent les Figures 2 à 5.

De cette manière, lorsque les plateaux 1 et 2 subissent une rotation relative à partir d'une position dans laquelle les billes reposent dans les parties de profondeur maximale telle que 7a, et dans le sens de rotation approprié, les billes progressent à l'intérieur des cavités correspondantes, et repoussent l'un de l'autre les plateaux 1 et 2 en exerçant sur eux des forces opposées orientées suivant la direction de l'axe 6.

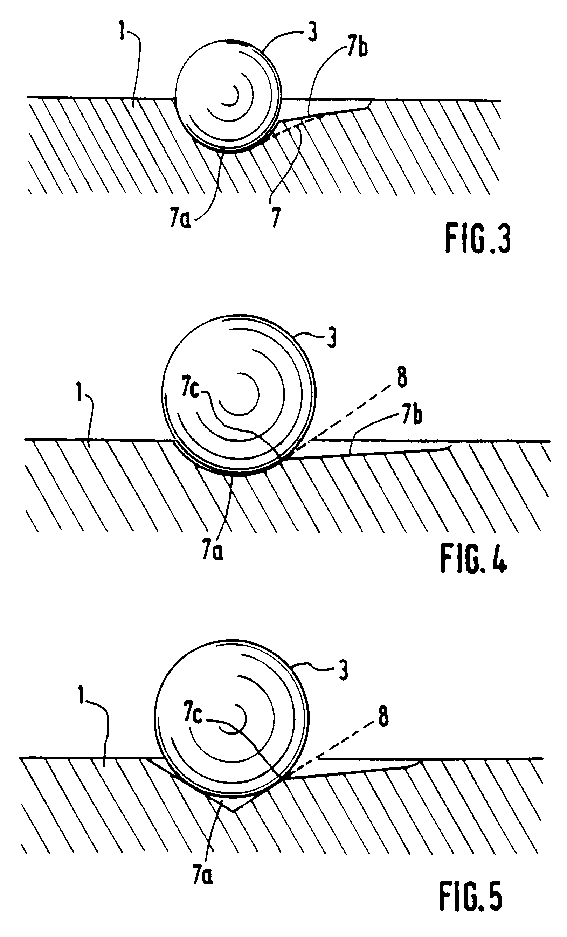

Selon l'invention (Figure 3 en traits pleins ; Figures 4 et 5), la partie la plus profonde 7a forme pour la bille correspondante 3 un logement qui la maintient dans une position unique déterminée et la cavité de guidage comprend, à l'extérieur de ce logement, une rampe 7b qui intercepte le logement en une pluralité de points d'intersection tels que 7c (Figures 4 et 5) au voisinage desquels d'une part la bille en place dans le logement 7a forme avec ce dernier une tangente 8 orientée suivant une première pente et au voisinage desquels d'autre part la rampe 7b présente une seconde pente, plus faible que la première pente, les points d'intersection tels que 7c se trouvant ainsi sur une discontinuité de pente.

La notion précédemment exprimée de pente plus ou moins faible prend pour référence la pente de la surface 1a du plateau, considérée comme nulle.

En d'autres termes, la pente de la rampe 7b est beaucoup plus proche de celle de la surface la que ne l'est celle de la tangente 8, et les points tels que 7c sont le lieu d'une transition franche d'une pente à l'autre.

La Figure 3, bien que schématique comme le sont toutes les figures 2 à 5, en ce sens qu'elle exagère dans un but de clarté la profondeur de la cavité de guidage et du logement 7a, permet de comprendre les raisons pour lesquelles un dispositif de serrage conforme à l'invention conduit à des résultats meilleurs que ceux de l'art antérieur.

En effet, puisque dans l'art antérieur (Figure 3, pointillés), la pente de la surface d'appui 7 de la cavité 13 évolue de façon continue, au moins jusqu'à une certaine distance à partir de la zone 7a de profondeur maximale, la pente de cette surface d'appui 7, au moins jusqu'à cette distance, est nécessairement supérieure à la pente de la rampe 7b du dispositif de l'invention.

Or, d'une part l'effort de rotation à fournir pour vaincre une force de serrage déterminée qui tend à rapprocher l'un de l'autre les deux plateaux est d'autant plus faible que la pente de la surface d'appui au point où se trouve alors la bille est faible et d'autre part, dans les applications concrètes du dispositif de l'invention, la force qui s'oppose à la rotation relative des plateaux est d'autant plus faible, en raison des tassements et rattrapages de jeux nécessaires, que le point de la cavité de guidage sur lequel porte la bille est plus profond.

En rattrapant tous les jeux pour une position de la bille (à savoir celle où la bille porte sur les points d'intersection 7c) qui est immédiatement contiguë de celle où la bille est au plus profond de la cavité de guidage, le dispositif de l'invention permet, pour une cavité de guidage de longueur donnée, d'augmenter le rapport entre l'effort de serrage produit par le dispositif et l'effort nécessaire pour entraîner les plateaux en rotation relative.

Comme le montrent les Figures 4 et 5, le logement 7a n'est pas contraint à adopter une forme particulière déterminée.

Il peut ainsi prendre notamment la forme d'une portion de sphère de rayon supérieur mais très voisin de celui de la bille (Figure 4), une forme conique (Figure 5) ou une forme tronconique.

## Revendications

1. Dispositif de serrage comprenant deux plateaux (1, 2) sensiblement parallèles dont l'un au moins est susceptible d'être entraîné dans un mouvement de rotation autour d'un axe (6) perpendiculaire à sa surface, une pluralité de cavités de guidage (13, 14, 15) creusées dans l'un au moins de ces plateaux à distance de l'axe et une pluralité de billes correspondantes (3, 4, 5) engagées dans les cavités et enserrées entre les deux plateaux, chaque cavité de guidage formant came et offrant une surface d'appui (7) qui s'élève de façon monotone, en parcourant un angle non nul du mouvement de rotation, depuis une partie (7a) de profondeur maximale jusqu'à la surface (1a) du plateau, caractérisé en ce que la partie (7a) de profondeur maximale de cette cavité forme pour la bille correspondante un logement qui la maintient dans une position unique déterminée, et en ce que cette cavité comprend, dans une partie de moindre profondeur, une rampe (7b) qui intercepte le logement en une pluralité de points d'intersection (7c) au voisinage immédiat desquels d'une part la bille forme avec le logement une tangente de première pente et au voisinage desquels d'autre part la rampe présente une seconde pente sensiblement plus faible que la première pente, lesdits points d'intersection se trouvant ainsi sur une discontinuité de pente.

2. Dispositif de serrage suivant la revendication 1, caractérisé en ce que le logement adopte la forme d'une portion de sphère de rayon voisin de celui de la bille.

3. Dispositif de serrage suivant la revendication 1, caractérisé en ce que le logement est de forme au moins partiellement conique.

## Patentansprüche

1. Spannvorrichtung mit zwei zueinander im wesentlichen parallelen Platten (1, 2), von denen wenigstens eine um eine zu ihrer Oberfläche senkrechten Achse (6) gedreht werden kann, sowie mehreren Führungs-Vertiefungen (13, 14, 15), die in wenigstens einer dieser Platten in einem Abstand von der Achse ausgebildet sind, und mehreren zugehörigen Kugeln (3, 4, 5), die in die Vertiefungen eingebracht und zwischen den beiden Platten eingespannt sind, wobei jede Führungs-Vertiefung eine Steuerkurve bildet und eine Abstützfläche (7) bietet, die beim Durchlaufen eines von null verschiedenen Drehbewegungswinkels von einem Abschnitt (7a) maximaler Tiefe bis zu der Oberfläche (1a) der Platte monoton ansteigt, dadurch gekennzeichnet, daß der Abschnitt (7a) maximaler Tiefe dieser Vertiefung für die entsprechende Kugel eine Aufnahme bildet, welche die Kugel in einer einzigen bestimmten Position hält, und daß diese Vertiefung in einem Abschnitt geringerer Tiefe eine Rampe (7b) umfaßt, welche die Aufnahme an mehreren Schnittpunkten (7c) schneidet, in deren unmittelbarer Nähe einerseits die Kugel mit der Aufnahme eine Tangente von erster Steigung bildet und in deren unmittelbarer Nähe andererseits die Rampe eine zweite Steigung aufweist, die merklich geringer als die erste Steigung ist, so daß sich die Schnittpunkte auf einer Diskontinuität der Steigung befinden.

2. Spannvorrichtung nach Anspruch 1, dadurch gekennzeichnet, daß die Aufnahme die Form eines Kugelabschnittes aufweist, dessen Radius demjenigen der Kugel angenähert ist.

3. Spannvorrichtung nach Anspruch 1, dadurch gekennzeichnet, daß die Aufnahme eine wenigstens teilweise konische Form aufweist.

## Claims

1. Clamping device consisting of two substantially parallel plates (1, 2) of which one at least may be driven in rotational movement about an axis (6) perpendicular to its surface, a plurality of guide cavities (13, 14, 15) hollowed out in at least one of these plates at a distance from the axis and a plurality of corresponding balls (3, 4, 5) inserted into the cavities and gripped between the two plates, each guide cavity forming a cam and providing a bearing surface (7) rising monotonically, covering a non-nil angle of the rotational movement, from a portion (7a) of maximum depth to the surface (1a) of the plate, characterized in that the portion (7a) of maximum depth of this cavity forms a housing for the corresponding ball, which holds it in a single determined position, and in that this cavity consists in a portion of lesser depth, of a ramp (7b) which intercepts the housing in a plurality of points of intersection (7c) in the direct vicinity of which, on the one hand, the ball forms a first slope tangent with the housing, and in the vicinity of which points, on the other hand, the ramp has a second slope which is substantially shallower than the first slope, said points of intersection thus being situated on a slope discontinuity.

2. Clamping device according to claim 1, characterized in that the housing adopts the shape of a portion of a sphere with a radius similar to that of the ball.

3. Clamping device according to claim 1, characterized in that the shape of the housing is at least partially conical.
